# EUROPEAN PATENT SPECIFICATION

(11) **EP 3 301 964 B1**
(45) Date of publication and mention of the grant of the patent: **22.04.2020**
(21) Application number: 16817124.7
(22) Date of filing: 13.06.2016
(51) Int. Cl.: H04W 24/02

(54) **WIRELESS NETWORK FUNCTION CONFIGURATION METHOD AND WIRELESS NETWORK NODE**
VERFAHREN ZUR KONFIGURATION DER FUNKTIONEN EINES DRAHTLOSEN NETZWERKS UND KNOTEN EINES DRAHTLOSEN NETZWERKS
PROCÉDÉ DE CONFIGURATION DES FONCTIONS D'UN RÉSEAU SANS FIL ET NOEUD DE RÉSEAU SANS FIL

(30) Priority: 30.06.2015 CN 201510376666
(43) Date of publication of application: 04.04.2018
(73) Proprietor: Huawei Technologies Co., Ltd., Longgang District Shenzhen, Guangdong 518129 (CN)
(72) Inventor: DAI, Mingzeng, Shenzhen, Guangdong 518129 (CN); ZHANG, Jian, Shenzhen, Guangdong 518129 (CN); LIU, Jing, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2016/085576
(87) International publication number: WO 2017/000760

(56) References cited:
- WO-A1-2015/002767
- WO-A1-2015/020837
- CN-A- 102 883 441
- CN-A- 103 580 778
- US-A1- 2006 227 726
- US-A1- 2012 005 354

## Description

### TECHNICAL FIELD

The present invention relates to the field of communications technologies, and in particular, to a wireless network function configuration method, a wireless network node, and a core network device.

### BACKGROUND

With exponential growth of services, a mobile network is evolving to the third generation mobile communications technology (the 5^{th}-generation, 5G for short). In a 5G network, a higher bandwidth and a higher spectral efficiency are required to support explosive growth of services. An ultra dense and low power small cell network may effectively provide a larger amount of data. However, denser network deployment causes higher interference between cells, and an interference scenario becomes more complex.

Centralized processing may effectively reduce the interference between the cells, and can ensure a load balance between the cells, thereby effectively increasing a system capacity. Recently, a cloud radio access network (Cloud Radio Access Network, C-RAN for short) is put forward as an effective centralized processing manner. The C-RAN is formed by a remote radio head (Remote Radio Head, RRH for short) and a baseband unit (Baseband Unit, BBU for short) pool. The RRH and the BBU pool are connected by using a common public radio interface (Common Public Radio Interface, CPRI for short).

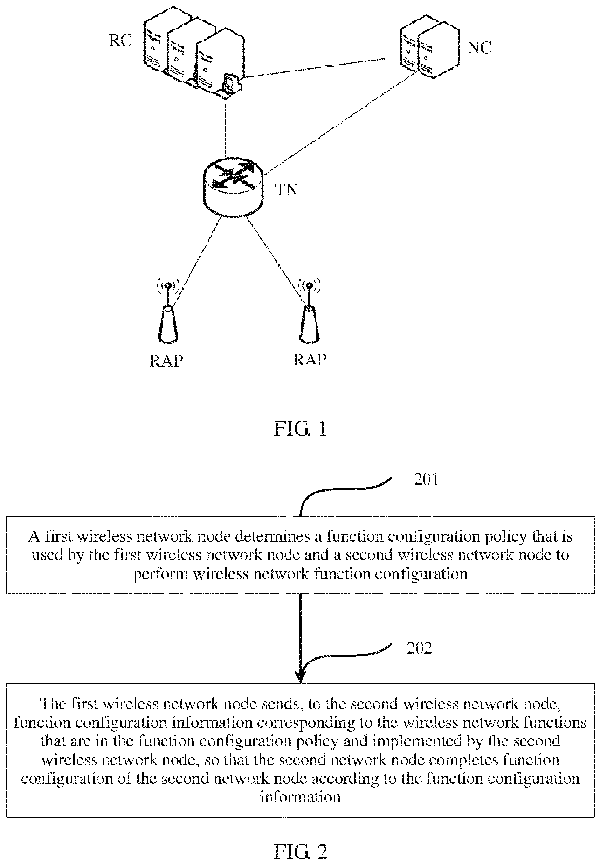

The RRH and the BBU communicate with each other by using a protocol. A current protocol stack architecture is shown in FIG. 1. All protocol layers include, from top to bottom, a packet data convergence protocol (English: Packet Data Convergence Protocol, PDCP for short) layer, a radio link control (English: Radio Link Control, RLC for short) layer, a media access control (English: Media Access Control, MAC for short) layer, a radio resource control protocol (English: Radio Resource Control, RRC for short) layer, and a physical (English: Physical, PHY for short) layer. In addition, wireless network functions corresponding to all the foregoing protocol layers are implemented by the BBU. Therefore, the CPRI interface between the RRH and the BBU always needs to be used in a user communication process.

Although the C-RAN may effectively increase the system capacity, a quite ideal transport network is required; that is, the CPRI interface requires an ideal bandwidth and an ideal delay. For example, in a cell that has a bandwidth of 20 MHz and supports 8 antennas, when a baseband is a bandwidth of 20 MHz, a baseband sampling rate is 30.72 M, and a sampling bit width is 15 bits, a line rate of one antenna is 30.72^{∗}15^{∗}2 (IQ)^{∗}16/15 (15 data bits and 1 control bit)=983.04 M, and a transmission rate on an IR interface after 8/10B encoding is performed is 983.04M^{∗}10/8=1228.8 M. That is, if MIMO is not used, a single sector of a signal antenna requires a CPRI transmission rate of 1228.8 M; and if three are 8 antennas, 1228.8 M needs to be multiplied by 8, and a transmission rate is up to 10 Gbit/s. A higher transmission rate requires a higher bandwidth of a transport network, and therefore, it is extremely difficult to achieve such a high transmission bandwidth between the RRU and the BBU pool. Consequently, deployment and use of a C-RAN system are limited.

A self-configurable wireless local area network node is described in US 2006/0227726 A1. US 2012/0005354 A1 proposes a method for negotiations between entities of a wireless local area network.

More particularly, US2006227726 A1 discloses a self-configurable wireless local area network node, e.g. an access controller (AC). The AC transmits a functionality inquiry to an access point, AP. Upon receiving the inquiry, the AP transmits a query response including the functional capabilities of the AP. The AC then generates a map of the functional capabilities present in the network based on the inquiry response. Conflicting or redundant functional capabilities are identified and are disabled, enabled, or reconfigured by instructions from the AC. Moreover, in US2012005354 A1, a negotiation may be carried out between a control node (CN) and a wireless access point (WAP) and among WAPs. According to the method, capabilities of various entities are set and it is decided how to divide (split) the capabilities between the negotiation entities optimally.

### SUMMARY

The invention is defined by the claims.

Embodiments of the present invention provide a wireless network function configuration method, a wireless network node, and a system according to the independent claims, so as to reduce a requirement on a bandwidth of a transport network while effectively reducing interference between cells and increasing a system capacity, thereby facilitating deployment and use of a C-RAN system as defined by the independent claims.

A beneficial effect of the present invention is: According to the solution provided in the embodiments of the present invention, a first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

### BRIEF DESCRIPTION OF DRAWINGS

FIG. 1 is a schematic diagram of a wireless access network architecture according to an embodiment of the present invention;
FIG. 2 is a flowchart of a wireless network function configuration method according to an embodiment of the present invention;
FIG. 3 is a flowchart of another wireless network function configuration method according to an embodiment of the present invention;
FIG. 4 is a schematic diagram of a first wireless network node according to an embodiment of the present invention;
FIG. 5 is a schematic diagram of a core network device according to an embodiment of the present invention;
FIG. 6 is a schematic diagram of another first wireless network node according to an embodiment of the present invention; and
FIG. 7 is a schematic diagram of another core network device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide a wireless network function configuration method, a wireless network node, and a core network device, so as to reduce a requirement on a bandwidth of a transport network while effectively reducing interference between cells and increasing a system capacity. The method, the wireless network node, and the core network device are based on a same inventive concept. Because problem resolution principles of the method, the wireless network node, and the core network device are similar, cross reference may be made between the implementations of the method, the wireless network node, and the core network device, and repeated description is not provided again.

An embodiment of the present invention provides a wireless access network architecture. As shown in FIG. 1, the wireless access network architecture includes a radio access point (English: Radio Access Point, RAP for short), a radio access controller (English: Radio Access Network Controlor, RC for short), a network controller (English: Network Controlor, NC for short) and a TN (Transportation Network, transport network, TN for short). The RAP, the RC, and the NC are connected by using the TN. The NC in the wireless access network architecture is connected to a core network device.

The foregoing wireless access network architecture is only an example, and the NC may further be a logical node that is integrated into the core network device or the RC.

An embodiment of the present invention provides a wireless network function configuration method. As shown in FIG. 2, the method includes the following steps.

Step 201: A first wireless network node determines a function configuration policy that is used by the first wireless network node and a second wireless network node to perform wireless network function configuration.

The first wireless network node may be an RC. The second wireless network node may be a RAP.

The function configuration policy includes a first part of wireless network functions that are of wireless network functions and implemented by the first wireless network node, and a second part of wireless network functions that are of the wireless network functions and implemented by the second wireless network node.

The wireless network functions include functions corresponding to the following layers: a packet data convergence PDCP layer, a radio link control RLC layer, a media access control MAC layer, and a physical layer.

Functions of all the protocol layers are as follows:
PDCP layer: header compression, information security (including encryption, decryption, and information integrity protection and verification), and the like.
RLC layer: automatic repeat request (English: Automatic Repeat Request, ARQ for short), segmentation, concatenation, re-sorting, and the like.
MAC layer: scheduling, priority processing, hybrid automatic repeat request (Hybrid Automatic Repeat Request, HARQ for short), and the like.
RRC layer: system message broadcasting, paging, RRC connection management, security management, bearer management, mobility management, and the like.
PHY layer: modulation/demodulation, encoding, multi-antenna mapping, and the like.

Step 202: The first wireless network node sends, to the second wireless network node, function configuration information corresponding to the wireless network functions that are in the function configuration policy and implemented by the second wireless network node, so that the second network node completes function configuration of the second network node according to the function configuration information.

Optionally, in step 201, the first wireless network node may determine, in the following manners, the function configuration policy that is used by the first wireless network node and the second wireless network node to perform wireless network function configuration.

### Implementation 1:

The first wireless network node determines, according to a local policy, the function configuration policy that is used by the first wireless network node and the second wireless network node to perform wireless network function configuration.

The local policy is pre-configured for the first wireless network node by an operation, administration and maintenance (English: operation, administration and maintenance, OAM for short) device.

The local policy may be:
The first part of wireless network functions that are of the wireless network functions and that need to be implemented by the first wireless network node include functions corresponding to the packet data convergence protocol PDCP layer and an upper layer of the PDCP layer, corresponding to the radio link control RLC layer and an upper layer of the RLC layer, or corresponding to the media access control MAC layer and an upper layer of the MAC layer; and
the second part of wireless network functions that are of the wireless network functions and that need to be implemented by the second wireless network node include other wireless network functions other than the wireless network functions implemented by the first wireless network node.

The local policy may further be:
the first part of wireless network functions that are of the wireless network functions and that need to be implemented by the first wireless network node include a part of functions corresponding to the PDCP layer and an upper layer of the PDCP layer, a part of functions corresponding to the RLC layer and an upper layer of the RLC layer, or a part of functions corresponding to the MAC layer and an upper layer of the MAC layer; and
the second part of wireless network functions that are of the wireless network functions and that need to be implemented by the second wireless network node include other wireless network functions other than the wireless network functions implemented by the first wireless network node.

The wireless network function layer includes, from top to bottom, the PDCP layer, the RLC layer, the MAC layer, and the physical layer.

In addition, the local policy may further include function configuration information corresponding to wireless network functions implemented by all wireless network nodes.

When receiving the local policy configured by the OAM device, the first wireless network node uses the local policy as the function configuration policy that is used by the first wireless network node and the second wireless network node to perform wireless network function configuration, so as to determine, according to the local policy, the function configuration information corresponding to the wireless network functions implemented by the second wireless network node, and then send the function configuration information to the second wireless network node. In this way, the second wireless network node completes function configuration of the second wireless network node according to the received function configuration information.

### Implementation 2:

Before determining the function configuration policy that is used by the first wireless network node and the second wireless network node to perform wireless network function configuration, the first wireless network node obtains function configuration parameters.

The function configuration parameters include at least one of the following: quality of service (English: Quality of Services, QoS for short) or backhaul link usage information.

A backhaul link may be a link between the first wireless network node and the second wireless network node, or may be a link between the first wireless network node and a core network device.

The first wireless network node determines the function configuration policy of the first wireless network node and the second wireless network node according to at least one of the obtained function configuration parameters.

Wireless network function configuration parameters corresponding to each wireless network function layer may be pre-configured on the first wireless network node by the OAM device.

When the first wireless network node receives the quality of service QoS sent by a core network, the quality of service QoS is obtained.

The quality of service QoS includes at least one of the following parameters: a service delay, a service priority identifier, or a service transmission rate.

Specifically, the quality of service QoS may be an average value of QoS of all services of all terminals associated with the first wireless network node.

The terminal and a core network negotiate the QoS of each service of the terminal, and then the core network sends the negotiated QoS of each service of the terminal to the first wireless network node. Then, after receiving the QoS of each service of the terminal, the first wireless network node obtains the average value of the QoS of all the services, and stores and uses the average value as the quality of service QoS of the terminal.

The first wireless network node receives the QoS that is of each service of each terminal and that is sent by the core network; and then calculates, based on the QoS of each service of each terminal, the average value of the QoS of all the service, stores the average value, and uses the average value as the quality of service QoS of the terminal. Then the quality of service QoS of all the terminals is periodically collected and an average value is obtained. The function configuration policy that is used by the first wireless network node and the second wireless network node to perform wireless network function configuration is determined according to the obtained average value of the quality of service QoS.

For example, a function configuration policy corresponding to a range of the quality of service QoS (the service delay is used as an example) may be preset, as shown in Table 1.

**Table 1**

| **Quality of service QoS** | **Function configuration policy** |
|---|---|
| a<=Service delay<b | Wireless network functions corresponding to a MAC layer and an upper layer of the MAC layer are configured on a first wireless network node, and wireless network functions of the MAC layer and a lower layer of the MAC layer are configured on a second wireless network node |
| b<=Service delay<c | Wireless network functions corresponding to a PDCP layer and an upper layer of the PDCP layer are configured on a first wireless network node, and wireless network functions of the PDCP layer and a lower layer of the PDCP layer are configured on a second wireless network node |

Alternatively, the quality of service QoS may be an average value of QoS of all services of a terminal associated with the first wireless network node.

Specifically, the terminal and a core network device negotiate the QoS of each service of the terminal, and then the core network device sends the negotiated QoS of each service of the terminal to the first wireless network node. Then, after receiving the QoS of each service of the terminal, the first wireless network node obtains the average value of the QoS of all the services, and stores and uses the average value as the quality of service QoS of the terminal. The first wireless network node determines, for the terminal according to the quality of service QoS of the terminal, the function configuration policy that is used by the first wireless network node and the second wireless network node to perform wireless network function configuration. The first wireless network node performs wireless network function configuration for all terminals associated with the first wireless network node, so that the first wireless network node separately processes services of all the terminals.

Alternatively, the quality of service QoS may be QoS of a service of a terminal associated with the first wireless network node.

Specifically, the terminal and a core network device negotiate the QoS of the service of the terminal, and then the core network sends the negotiated QoS of the service of the terminal to the first wireless network node. Then, after receiving the QoS of the service of the terminal, the first wireless network node determines, for the service of the terminal according to the quality of service QoS of the terminal, the function configuration policy that is used by the first wireless network node and the second wireless network node to perform wireless network function configuration. The first wireless network node performs wireless network function configuration for all services of the terminal, so that the first wireless network node separately processes all the services of the terminal, thereby separately performing wireless network function configuration for all services of a terminal associated with the first wireless network node.

For example, the first wireless network node is an RC, and the second wireless network node is a RAP. A network controller collects and monitors usage information of each backhaul link on a backhaul network, and sends, by using the RC or the RAP, the usage information of each backhaul link to each terminal associated with the RAP.

When initiating a service, the terminal selects service parameters, such as a transmission rate range, according to the usage information of the backhaul link. Then the terminal negotiates with a peer end about actual service parameters of a service of the terminal according to the service parameters selected by the terminal, and then sends the negotiated service parameters to a core network device. For example, if a transmission rate range selected by the terminal is A, and a transmission rate range that can be supported by the peer end is B, a negotiated transmission rate range may be an intersection set of A and B.

Then the core network device determines quality of service QoS of the service according to the service parameters of the service initiated by the terminal, and sends the determined quality of service QoS of the service to the RC. Then the RC determines, for the service of the terminal according to the quality of service QoS of the service, the function configuration policy that is used by the RC and the RAP to perform wireless network function configuration. The RC may further determine, for the service of the terminal according to the quality of service QoS of the service and the pre-obtained usage information of the backhaul link, the function configuration policy that is used by the RC and the RAP to perform wireless network function configuration.

Specific manners for obtaining backhaul link usage information by the first wireless network node may include but are not limited to the following manners.

### Implementation 1:

The first wireless network node obtains the backhaul link usage information that is obtained by means of monitoring.

### Implementation 2:

The first wireless network node receives the backhaul link usage information sent by the core network device.

### Implementation 3:

The first wireless network node receives the backhaul link usage information sent by a backhaul link node.

The backhaul link usage information may include at least one of the following: backhaul link load information or backhaul link delay information.

The backhaul link load information may be a percentage of a backhaul link load amount or a backhaul link bandwidth utilization; or may be a backhaul link load amount and a total bearable load amount of a backhaul link. The backhaul link delay information may be an average delay of data packets transmitted over a backhaul link.

For example, a function configuration policy corresponding to a range of the quality of service QoS (the service delay is used as an example) and the backhaul link load amount may be preset, as shown in Table 2.

**Table 2**

| **Quality of service QoS** | **Backhaul link load information** | **Function configuration policy** |
|---|---|---|
| a<=Service delay<b | 0<=Backhaul link load amount<d | Wireless network functions corresponding to a MAC layer and an upper layer of the MAC layer are configured on a first wireless network node, and wireless network functions of the MAC layer and a lower layer of the MAC layer are configured on a second wireless network node |
| b<=Service delay<c | d<=Backhaul link load amount<f | Wireless network functions corresponding to a PDCP layer and an upper layer of the PDCP layer are configured on a first wireless network node, and wireless network functions of the PDCP layer and a lower layer of the PDCP layer are configured on a second wireless network node |

Optionally, when determining the function configuration policy that is used by the first wireless network node and the second wireless network node to perform wireless network function configuration, the first wireless network node pre-determines wireless network function configuration capabilities of the first wireless network node and the second wireless network node. For example, whether the RAP supports the function corresponding to the MAC layer is determined.

Certainly, alternatively, when the function configuration policy corresponding to the range of the quality of service QoS (the service delay is used as an example) and the backhaul link load amount is preset, wireless network functions that can be supported by the RAP and the RC may be determined, and then the function configuration policy corresponding to the range of the quality of service QoS (the service delay is used as an example) and the backhaul link load amount is set according to the determined wireless network functions that can be supported by the RAP and the RC.

Optionally, in step 202, when sending the function configuration information to the second wireless network node, the first wireless network node may directly send the function configuration information to the second wireless network node; or may add the function configuration information to a network function configuration indication message, and send the network function configuration indication message to the second wireless network node.

Optionally, before the first wireless network node sends the function configuration information to the second wireless network node, the first wireless network node may further determine user data routing information and/or gateway information selected for a user.

For example, the first wireless network node may be an RC, and the second wireless network node may be a RAP. A network controller collects and monitors usage information of each backhaul link on a backhaul network, and sends, by using the RC or the RAP, the usage information of each backhaul link to each terminal associated with the RAP.

When initiating a service, the terminal selects service parameters, such as a transmission rate range, according to the usage information of the backhaul link. The terminal negotiates with a peer end about service parameters of a service of the terminal, and then sends the negotiated service parameters to a core network device. The core network device sends the network controller the service parameters of the service initiated by the terminal. The network controller selects, according to the service parameters of the service and the backhaul link usage information, a user plane path for the service initiated by the terminal, that is, selects a user plane gateway; and sends information about the selected user plane path to the core network device and the RC.

For example, when a backhaul link bandwidth utilization corresponding to a user plane gateway that is closest to the terminal ("close" herein refers to a short physical distance) is relatively high, a user plane gateway that is second closest to the terminal may also be selected. Alternatively, a user plane gateway corresponding to a backhaul link with a lowest backhaul link bandwidth utilization may be selected.

Then the core network device determines quality of service QoS of the service according to the service parameters of the service initiated by the terminal and information about the user plane path for the service, and sends the determined quality of service QoS of the service to the RC. Then the RC determines, for the service of the terminal according to the quality of service QoS of the service, the function configuration policy that is used by the RC and the RAP to perform wireless network function configuration.

According to the solution provided in this embodiment of the present invention, a first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

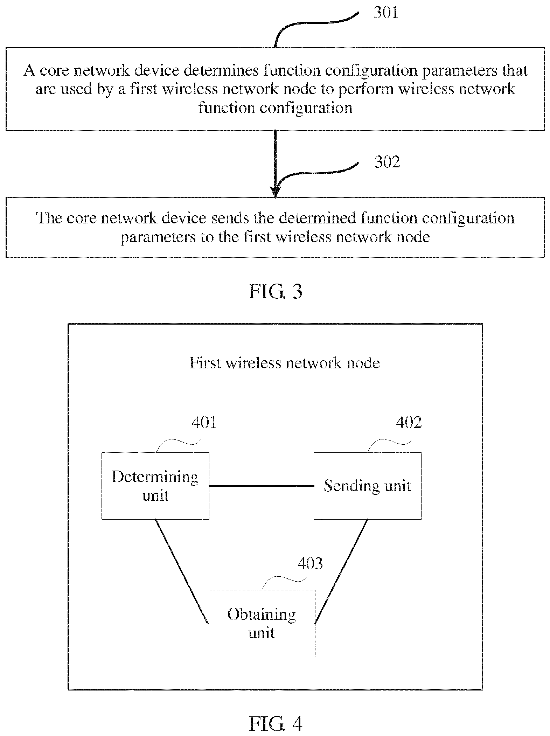

An embodiment of the present invention further provides a wireless network function configuration method. As shown in FIG. 3, the method includes:
Step 301: A core network device determines function configuration parameters that are used by a first wireless network node to perform wireless network function configuration.
Step 302: The core network device sends the determined function configuration parameters to the first wireless network node.

After receiving the function configuration parameters, the first wireless network node determines, according to the function configuration parameters, a function configuration policy that is used by the first wireless network node and the second wireless network node to perform wireless network function configuration.

The first wireless network node may be an RC. The second wireless network node may be a RAP.

The function configuration policy includes a part of wireless network functions that are of wireless network functions and implemented by the first wireless network node, and another part of wireless network functions, other than the part of wireless network functions implemented by the first wireless network node, that are of the wireless network functions and that are implemented by the second wireless network node.

The wireless network functions include at least functions corresponding to the following layers: a packet data convergence PDCP layer, a radio link control RLC layer, a media access control MAC layer, and a physical layer.

The function configuration parameters include at least one of the following: quality of service QoS or backhaul link usage information.

When the function configuration parameters include the quality of service QoS, manners for determining, by the core network device, the function configuration parameters that are used by the first wireless network node to perform wireless network function configuration may be as follows:

### Implementation 1:

The core network device determines the quality of service QoS according to received service parameters that are of an initiated service and sent by user equipment UE.

The service parameters include a transmission rate.

### Implementation 2:

The core network device determines the quality of service QoS according to received backhaul link usage information sent by a network controller.

### Implementation 3:

The core network device determines the quality of service QoS according to received service parameters that are of an initiated service and sent by user equipment UE and received backhaul link usage information sent by a network controller.

The backhaul link usage information includes at least one of the following: backhaul link load information or backhaul link delay information.

According to the solution provided in this embodiment of the present invention, a core network device determines function configuration parameters that are used by a first wireless network node to perform wireless network function configuration, and the core network device sends the determined function configuration parameters to the first wireless network node. Then the first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

Based on an inventive concept that is the same as that of the wireless network function configuration method, an embodiment of the present invention further provides a first wireless network node. As shown in FIG. 4, the first wireless network node includes: The first wireless network node may be an RC, and the second wireless network node may be a RAP.
a determining unit 401, configured to determine a function configuration policy that is used by the first wireless network node and a second wireless network node to perform wireless network function configuration, where
the function configuration policy includes a first part of wireless network functions that are of wireless network functions and implemented by the first wireless network node, and a second part of wireless network functions that are of the wireless network functions and implemented by the second wireless network node; and
a sending unit 402, configured to send, to the second wireless network node, function configuration information corresponding to the first part of wireless network functions that are in the function configuration policy and implemented by the second wireless network node, so that the second wireless network node completes function configuration of the second wireless network node according to the function configuration information.

In an optional embodiment, the determining unit 401 is specifically configured to:
determine, according to a local policy, the function configuration policy that is used by the first wireless network node and the second wireless network node to perform wireless network function configuration, where
the local policy is pre-configured for the first wireless network node by an operation, administration and maintenance OAM device.

In another optional embodiment, the first wireless network node may further include an obtaining unit 403 shown by a dashed box in FIG. 4.

The obtaining unit 403 is configured to obtain function configuration parameters before the determining unit 401 determines the function configuration policy that is used by the first wireless network node and the second wireless network node to perform wireless network function configuration.

The determining unit 401 is specifically configured to determine the function configuration policy of the first wireless network node and the second wireless network node according to at least one of the function configuration parameters obtained by the obtaining unit 403.

Further, the function configuration parameters may include at least one of the following: quality of service QoS or backhaul link usage information.

Optionally, the obtaining unit 403 may obtain the quality of service QoS in the following manner: receiving the quality of service QoS sent by a core network device.

The quality of service QoS may include at least one of the following parameters: a service delay, a service priority identifier, or a service transmission rate.

Optionally, when obtaining the backhaul link usage information, the obtaining unit 403 is specifically configured to: obtain the backhaul link usage information that is obtained by the obtaining unit 403 by means of monitoring; receive the backhaul link usage information sent by a core network device; or receive the backhaul link usage information sent by a backhaul link node.

The backhaul link usage information includes at least one of the following: backhaul link load information or backhaul link delay information.

Optionally, the function division policy may include either of the following:
the first part of wireless network functions that are of the wireless network functions and that need to be implemented by the first wireless network node include functions corresponding to a packet data convergence protocol PDCP layer and an upper layer of the PDCP layer, corresponding to a radio link control RLC layer and an upper layer of the RLC layer, or corresponding to a media access control MAC layer and an upper layer of the MAC layer, and the second part of wireless network functions that are of the wireless network functions and that need to be implemented by the second wireless network node include other wireless network functions other than the wireless network functions implemented by the first wireless network node; or
the first part of wireless network functions that are of the wireless network functions and that need to be implemented by the first wireless network node include a part of functions corresponding to a PDCP layer and an upper layer of the PDCP layer, a part of functions corresponding to an RLC layer and an upper layer of the RLC layer, or a part of functions corresponding to a MAC layer and an upper layer of the MAC layer, and the second part of wireless network functions that are of the wireless network functions and that need to be implemented by the second wireless network node include other wireless network functions other than the wireless network functions implemented by the first wireless network node.

Optionally, when sending, to the second wireless network node, the function configuration information corresponding to the first part of wireless network functions that are in the function configuration policy determined by the determining unit 401 and that is implemented by the second wireless network node, the sending unit 402 is specifically configured to:
send network function configuration indication information to the second wireless network node, where the network function configuration indication information carries the function configuration information.

It should be noted that the wireless network node embodiment and the method embodiment provided in the present invention are based on a same inventive concept. Because problem resolution principles of the method and the device are similar, cross reference may be made between the implementations of the device and the method, and repeated description is not provided again.

According to the solution provided in this embodiment of the present invention, a first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

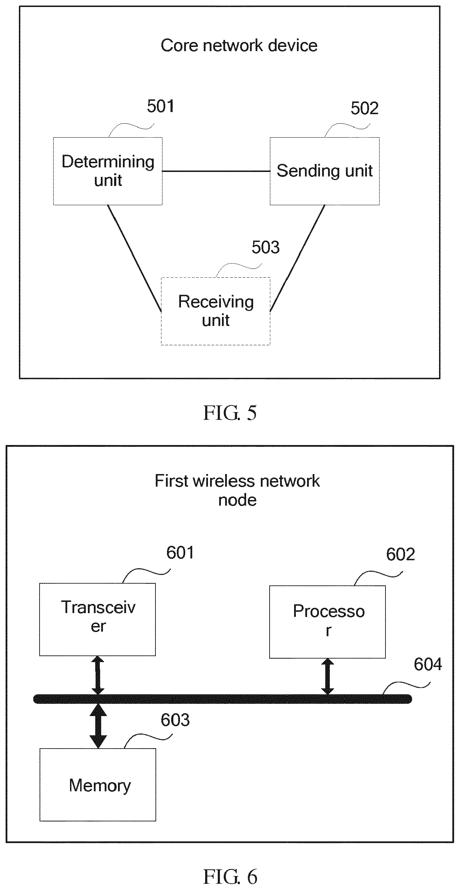

An embodiment of the present invention further provides a core network device. As shown in FIG. 5, the device includes:
a determining unit 501, configured to determine function configuration parameters that are used by a first wireless network node to perform wireless network function configuration; and
a sending unit 502, configured to send the function configuration parameters determined by the determining unit 501 to the first wireless network node.

The function configuration parameters may include at least one of the following: quality of service QoS or backhaul link usage information.

When the function configuration parameters include the quality of service QoS, the device may further include:
a receiving unit 503, configured to receive service parameters that are of an initiated service and sent by user equipment UE and/or backhaul link usage information.

When determining the function configuration parameters that are used by the first wireless network node to perform wireless network function configuration, the determining unit 501 is specifically configured to: determine the quality of service QoS according to the service parameters that are of the initiated service, sent by the user equipment UE, and received by the receiving unit 503; determine the quality of service QoS according to the backhaul link usage information that is sent by a network controller and received by the receiving unit 503; or determine the quality of service QoS according to the service parameters that are of the initiated service, sent by the UE, and received by the receiving unit 503, and the received backhaul link usage information sent by a network controller.

The service parameters may include a transmission rate.

The backhaul link usage information may include at least one of the following: backhaul link load information or backhaul link delay information.

It should be noted that the core network device embodiment and the method embodiment provided in the present invention are based on a same inventive concept. Because problem resolution principles of the method and the device are similar, cross reference may be made between the implementations of the device and the method, and repeated description is not provided again.

According to the solution provided in this embodiment of the present invention, a core network device determines function configuration parameters that are used by a first wireless network node to perform wireless network function configuration, and the core network device sends the determined function configuration parameters to the first wireless network node. Then the first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

An embodiment of the present invention further provides a first wireless network node that may be implemented by an RC. As shown in FIG. 6, the device includes a transceiver 601, a processor 602, and a memory 603. The transceiver 601, the processor 602, and the memory 603 are connected to each other. A medium used to connect the foregoing components is not specifically limited in this embodiment of the present invention. In this embodiment of the present invention, in FIG. 6, the memory 603, the processor 602, and the transceiver are connected by using a bus 604. In FIG. 6, the bus is represented by using a thick line. A manner for connecting other components is only used as an example for description, and this embodiment is not limited thereto. The bus may be classified into an address bus, a data bus, a control bus, and the like. For ease of denotation, the bus is represented by using only one thick line in FIG. 6. However, it does not mean that there is only one bus or only one type of bus.

In this embodiment of the present invention, the memory 603 is configured to store program code executed by the processor 602, and may be a volatile memory (English: volatile memory), for example, a random access memory (English: random-access memory, RAM for short); or the memory 603 may be a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short); or the memory 603 is any other medium that can be used to carry or store expected program code in a command or data structure form and can be accessed by a computer. However, the memory 603 is not limited thereto. The memory 603 may be a combination of the foregoing types of memories.

In this embodiment of the present invention, the processor 602 may be a central processing unit (English: central processing unit, CPU for short).

The processor 602 determines a function configuration policy that is used by the first wireless network node and a second wireless network node to perform wireless network function configuration.

The function configuration policy includes a first part of wireless network functions that are of wireless network functions and implemented by the first wireless network node, and a second part of wireless network functions that are of the wireless network functions and implemented by the second wireless network node.

The transceiver 601 sends, to the second wireless network node, function configuration information corresponding to the first part of wireless network functions that are in the function configuration policy determined by the processor 602 and that is implemented by the second wireless network node, so that the second wireless network node completes function configuration of the second wireless network node according to the function configuration information.

When determining the function configuration policy that is used by the first wireless network node and the second wireless network node to perform wireless network function configuration, the processor 602 may determine, according to a local policy, the function configuration policy that is used by the first wireless network node and the second wireless network node to perform wireless network function configuration, where
the local policy is pre-configured for the first wireless network node by an operation, administration and maintenance OAM device.

Before determining the function configuration policy that is used by the first wireless network node and the second wireless network node to perform wireless network function configuration, the processor 602 obtains function configuration parameters; and then determines the function configuration policy of the first wireless network node and the second wireless network node according to at least one of the obtained function configuration parameters.

The function configuration parameters include at least one of the following: quality of service QoS or backhaul link usage information.

The processor 602 may determine, in the following manner, that the quality of service QoS is obtained:
When determining that the transceiver 601 receives the quality of service QoS sent by a core network device, the processor 602 determines that the quality of service QoS is obtained.

The quality of service QoS may include at least one of the following parameters: a service delay, a service priority identifier, or a service transmission rate.

The processor 602 may determine, in the following manner, that the backhaul link usage information is obtained:
When obtaining the backhaul link usage information that is obtained by the processor 602 by means of monitoring, the processor 602 determines that the backhaul link usage information is obtained; or
determines that the transceiver 601 receives the backhaul link usage information sent by the core network device; or
determines that the transceiver 601 receives the backhaul link usage information sent by a backhaul link node.

The backhaul link usage information includes at least one of the following: backhaul link load information or backhaul link delay information.

Optionally, the function division policy may include either of the following:
the first part of wireless network functions that are of the wireless network functions and that need to be implemented by the first wireless network node include functions corresponding to a packet data convergence protocol PDCP layer and an upper layer of the PDCP layer, corresponding to a radio link control RLC layer and an upper layer of the RLC layer, or corresponding to a media access control MAC layer and an upper layer of the MAC layer, and the second part of wireless network functions that are of the wireless network functions and that need to be implemented by the second wireless network node include other wireless network functions other than the wireless network functions implemented by the first wireless network node; or
the first part of wireless network functions that are of the wireless network functions and that need to be implemented by the first wireless network node include a part of functions corresponding to a PDCP layer and an upper layer of the PDCP layer, a part of functions corresponding to an RLC layer and an upper layer of the RLC layer, or a part of functions corresponding to a MAC layer and an upper layer of the MAC layer, and the second part of wireless network functions that are of the wireless network functions and that need to be implemented by the second wireless network node include other wireless network functions other than the wireless network functions implemented by the first wireless network node.

When sending the function configuration information to the second wireless network node, the transceiver 601 sends network function configuration indication information to the second wireless network node, where the network function configuration indication information carries the function configuration information.

It should be noted that the wireless network node embodiment and the method embodiment provided in the present invention are based on a same inventive concept. Because problem resolution principles of the method and the device are similar, cross reference may be made between the implementations of the device and the method, and repeated description is not provided again.

According to the solution provided in this embodiment of the present invention, a first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

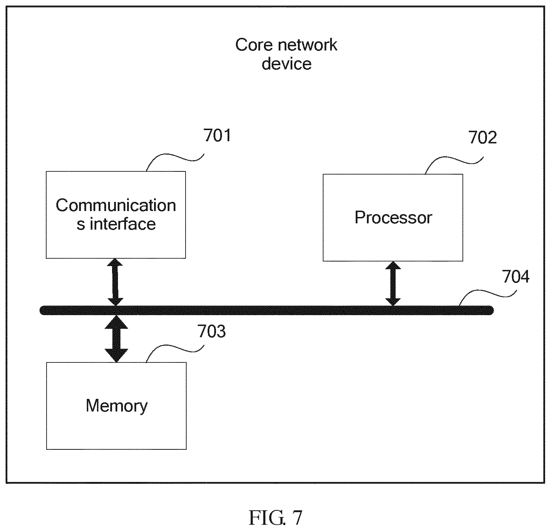

An embodiment of the present invention further provides a core network device. As shown in FIG. 7, the device includes a communications interface 701, a processor 702, and a memory 703. The communications interface 701, the processor 702, and the memory 703 are connected to each other. A medium used to connect the foregoing components is not specifically limited in this embodiment of the present invention. In this embodiment of the present invention, in FIG. 7, the memory 703, the processor 702, and the communications interface 701 are connected by using a bus 704. In FIG. 7, the bus is represented by using a thick line in FIG. 7. A manner for connecting other components is only used as an example for description, and this embodiment is not limited thereto. The bus may be classified into an address bus, a data bus, a control bus, and the like. For ease of denotation, the bus is represented by using only one thick line in FIG. 7. However, it does not mean that there is only one bus or only one type of bus.

In this embodiment of the present invention, the communications interface 701 may be a wired interface, or may be a wireless interface; and all interface forms that can be used to implement communication with another network are applicable to the present invention.

In this embodiment of the present invention, the memory 703 is configured to store program code executed by the processor 702, and may be a volatile memory (English: volatile memory), for example, a random access memory (English: random-access memory, RAM for short); or the memory 703 may be a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short); or the memory 703 is any other medium that can be used to carry or store expected program code in a command or data structure form and can be accessed by a computer. However, the memory 703 is not limited thereto. The memory 703 may be a combination of the foregoing types of memories.

In this embodiment of the present invention, the processor 702 may be a central processing unit (English: central processing unit, CPU for short).

The processor 702 determines function configuration parameters that are used by a first wireless network node to perform wireless network function configuration; and then the communications interface 701 sends the determined function configuration parameters to the first wireless network node.

The function configuration parameters include at least one of the following: quality of service QoS or backhaul link usage information.

When the function configuration parameters include the quality of service QoS, the processor 702 may determine, in the following manner, the function configuration parameters that are used by the first wireless network node to perform wireless network function configuration:
determining the quality of service QoS according to service parameters that are of an initiated service, sent by user equipment UE, and received by the communications interface 701; or
determining the quality of service QoS according to backhaul link usage information sent by a network controller and received by the communications interface 701; or
determining the quality of service QoS according to service parameters that are of an initiated service, sent by user equipment UE, and received by the communications interface 701 and received backhaul link usage information sent by a network controller.

The service parameters may include a transmission rate.

The backhaul link usage information may include at least one of the following: backhaul link load information or backhaul link delay information.

It should be noted that the core network device embodiment and the method embodiment provided in the present invention are based on a same inventive concept. Because problem resolution principles of the method and the device are similar, cross reference may be made between the implementations of the device and the method, and repeated description is not provided again.

According to the solution provided in this embodiment of the present invention, a core network device determines function configuration parameters that are used by a first wireless network node to perform wireless network function configuration, and the core network device sends the determined function configuration parameters to the first wireless network node. Then the first wireless network node determines a function configuration policy that is used by the first wireless network node and a second wireless network node to perform wireless network function configuration. The first wireless network node implements a first part of wireless network functions that are of wireless network functions, and the second wireless network node implements a second part of wireless network functions that are of the wireless network functions, so that the first wireless network node and the second wireless network node implement the wireless network functions respectively to communicate with a user. This reduces a CPRI interface utilization, and reduces a requirement on bandwidth usage, thereby facilitating deployment and use of a C-RAN system.

A person skilled in the art should understand that the embodiments of the present invention may be provided as a method, a system, or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.
These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.
Although some preferred embodiments of the present invention have been described, a person skilled in the art can make changes and modifications to these embodiments once he learns the basic inventive concept. Therefore, the following claims are intended to be construed as to cover the preferred embodiments and all changes and modifications falling within the scope of the present invention.
Obviously, a person skilled in the art can make various modifications and variations to the present invention without departing from the scope of the present invention. The present invention is intended to cover these modifications and variations provided that they fall within the scope of protection defined by the following claims.

## Claims

1. A method for configuration of wireless network functions of a cloud radio access network, C-RAN, comprising:
determining (201), by a first wireless network node of the C-RAN, a first policy that is used by the first wireless network node and a second wireless network node of the C-RAN to perform the configuration of the wireless network functions, wherein
the first policy comprises a first part of wireless network functions that are of wireless network functions and implemented by the first wireless network node, and a second part of wireless network functions that are of the wireless network functions and implemented by the second wireless network node, wherein the second part of wireless network functions includes other wireless network functions other than the first part of wireless network functions; and
sending (202), by the first wireless network node and to the second wireless network node, first information for configuration of functions corresponding to the second part of wireless network functions that are in the first policy and implemented by the second wireless network node, so that the second wireless network node completes configuration of functions of the second wireless network node according to the first information
**characterized in that**
the first part of wireless network functions comprises functions corresponding to a packet data convergence protocol, PDCP, layer and an upper layer of the PDCP layer, or corresponding to a radio link control, RLC, layer and an upper layer of the RLC layer, wherein the determining, by a first wireless network node, a first policy that is used by the first wireless network node and the second wireless network node to perform the configuration of the wireless network comprises:
determining, by the first wireless network node according to a second policy, the first policy that is used by the first wireless network node and the second wireless network node to perform the configuration of the wireless network functions, wherein
the second policy is pre-configured for the first wireless network node by an operation, administration and maintenance, OAM, device and wherein the second policy includes function configuration information corresponding to wireless network functions implemented by all wireless network nodes.

2. A first wireless network node of a cloud radio access network, C-RAN, comprising:
a determining unit (401), configured to determine a first policy that is used by the first wireless network node and a second wireless network node of the C-RAN to perform the configuration of the wireless network functions , wherein
the first policy comprises a first part of wireless network functions that are of wireless network functions and implemented by the first wireless network node, and a second part of wireless network functions that are of the wireless network functions and implemented by the second wireless network node, wherein the second part of wireless network functions includes other wireless network functions other than the first part of wireless network functions; and
a sending unit (402), configured to send, to the second wireless network node, first information corresponding to the second part of wireless network functions that are in the first policy determined by the determining unit (401) and that is implemented by the second wireless network node, so that the second wireless network node completes configuration of functions of the second wireless network node according to the first information
**characterized in that**
the first part of wireless network functions comprises functions corresponding to an packet data convergence protocol, PDCP, layer and an upper layer of the PDCP layer, or corresponding to an radio link control, RLC, layer and an upper layer of the RLC layer, wherein the determining unit (401) is specifically configured to:
determine, according to a second policy, the first policy that is used by the first wireless network node and the second wireless network node to perform the configuration of the wireless network functions, wherein
the second policy is pre-configured for the first wireless network node by an operation, administration and maintenance, OAM, device and wherein the second policy includes function configuration information corresponding to wireless network functions implemented by all wireless network nodes.

3. A system comprising a wireless network node of a cloud radio access network, C-RAN, according to claim 2 and a core network device, comprising:
a determining unit (501), configured to determine parameters for the configuration of the functions wherein the parameters are used by a first wireless network node to perform the configuration of the wireless network functions; and
a sending unit (502), configured to send the parameters determined by the determining unit (501) to the first wireless network node.

4. The system according to claim 3 wherein the parameters comprise at least one of the following: quality of service, QoS, or backhaul link usage information.

5. The system according to claim 4, wherein when the parameters comprise the quality of service, QoS, the core network device further comprises:
a receiving unit (503), configured to receive service parameters that are of an initiated service and sent by user equipment, UE, and/or backhaul link usage information; and
when determining the parameters that are used by the first wireless network node to perform the configuration of the wireless network function, the determining unit (501) is configured to: determine the quality of service, QoS, according to the service parameters that are of the initiated service, sent by the user equipment, UE, and received by the receiving unit (503); determine the quality of service, QoS, according to the backhaul link usage information that is sent by a network controller and received by the receiving unit (503); or determine the quality of service, QoS, according to the service parameters that are of the initiated service, sent by the UE, and received by the receiving unit (503), and the received backhaul link usage information sent by a network controller.

6. The system according to claim 5, wherein the service parameters comprise a transmission rate.

7. The system according to claims 5 or 6, wherein the backhaul link usage information comprises at least one of the following: backhaul link load information or backhaul link delay information.

## Patentansprüche

1. Verfahren zum Konfigurieren von drahtlosen Netzwerkfunktionen eines Cloud-Funkzugangsnetzwerks (*cloud radio access network-* C-RAN), Folgendes umfassend:
Bestimmen (201) durch einen ersten drahtlosen Netzwerkknoten des C-RAN einer ersten Richtlinie, die von dem ersten drahtlosen Netzwerkknoten und einem zweiten drahtlosen Netzwerkknoten des C-RAN verwendet wird, um die Konfiguration der drahtlosen Netzwerkfunktionen durchzuführen, wobei die erste Richtlinie einen ersten Teil von drahtlosen Netzwerkfunktionen, die drahtlose Netzwerkfunktionen sind und von dem ersten drahtlosen Netzwerkknoten implementiert werden, und einen zweiten Teil von drahtlosen Netzwerkfunktionen umfasst, die drahtlose Netzwerkfunktionen sind und von dem zweiten drahtlosen Netzwerkknoten implementiert werden, wobei der zweite Teil der drahtlosen Netzwerkfunktionen andere drahtlose Netzwerkfunktionen als der erste Teil der drahtlosen Netzwerkfunktionen beinhaltet; und
Senden (202) durch den ersten drahtlosen Netzwerkknoten und an den zweiten drahtlosen Netzwerkknoten, von ersten Informationen für eine Konfiguration von Funktionen, die dem zweiten Teil der drahtlosen Netzwerkfunktionen entsprechen, die in der ersten Richtlinie sind und von dem zweiten drahtlosen Netzwerkknoten implementiert werden, sodass der zweite drahtlose Netzwerkknoten die Konfiguration von Funktionen des zweiten drahtlosen Netzwerkknotens gemäß der ersten Information abschließt **dadurch gekennzeichnet, dass** der erste Teil der drahtlosen Netzwerkfunktionen Funktionen umfasst, die einer Paketdatenkonvergenzprotokoll(*packet data convergence protocol-* PDCP)schicht und einer oberen Schicht der PDCP-Schicht oder einer Funkverbindungssteuerungs(radio *link control-* RLC)schicht und einer oberen Schicht der RLC-Schicht entsprechen, wobei das Bestimmen durch einen ersten drahtlosen Netzwerkknoten einer ersten Richtlinie, die von dem ersten drahtlosen Netzwerkknoten und dem zweiten drahtlosen Netzwerkknoten verwendet wird, um die Konfiguration des drahtlosen Netzwerks durchzuführen, Folgendes umfasst:
Bestimmen durch den ersten drahtlosen Netzwerkknoten gemäß einer zweiten Richtlinie der ersten Richtlinie, die von dem ersten drahtlosen Netzwerkknoten und dem zweiten drahtlosen Netzwerkknoten verwendet wird, um die Konfiguration der drahtlosen Netzwerkfunktionen durchzuführen, wobei die zweite Richtlinie für den ersten drahtlosen Netzwerkknoten durch eine Betriebs-, Administrations- und Wartungs(*operation, administration and maintenance* - OAM)vorrichtung vorkonfiguriert ist, und wobei die zweite Richtlinie Funktionskonfigurationsinformationen beinhaltet, die den von allen drahtlosen Netzwerkknoten implementierten drahtlosen Netzwerkfunktionen entsprechen.

2. Erster drahtloser Netzwerkknoten eines Cloud-Funkzugangsnetzwerks (C-RAN), Folgendes umfassend:
eine Bestimmungseinheit (401), die konfiguriert ist, um eine erste Richtlinie zu bestimmen, die von dem ersten drahtlosen Netzwerkknoten und einem zweiten drahtlosen Netzwerkknoten des C-RAN verwendet wird, um die Konfiguration der drahtlosen Netzwerkfunktionen durchzuführen, wobei die erste Richtlinie einen ersten Teil der drahtlosen Netzwerkfunktionen, die drahtlose Netzwerkfunktionen sind und von dem ersten drahtlosen Netzwerkknoten implementiert werden, und einen zweiten Teil der drahtlosen Netzwerkfunktionen umfasst, die drahtlose Netzwerkfunktionen sind und von dem zweiten drahtlosen Netzwerkknoten implementiert werden, wobei der zweite Teil der drahtlosen Netzwerkfunktionen andere drahtlose Netzwerkfunktionen als der erste Teil der drahtlosen Netzwerkfunktionen beinhaltet; und
eine Sendeeinheit (402), die konfiguriert ist, um an den zweiten drahtlosen Netzwerkknoten erste Informationen, die dem zweiten Teil der drahtlosen Netzwerkfunktionen entsprechen, die in der ersten Richtlinie sind, die durch die Bestimmungseinheit (401) bestimmt wird, und von dem zweiten drahtlosen Netzwerkknoten implementiert werden, sodass der zweite drahtlose Netzwerkknoten die Konfiguration von Funktionen des zweiten drahtlosen Netzwerkknotens gemäß der ersten Information abschließt,
**dadurch gekennzeichnet, dass**
der erste Teil der drahtlosen Netzwerkfunktionen Funktionen umfasst, die einer Paketdatenkonvergenzprotokoll(PDCP)schicht und einer oberen Schicht der PDCP-Schicht oder einer Funkverbindungssteuerungs(RLC)schicht und einer oberen Schicht der RLC-Schicht, wobei die Bestimmungseinheit (401) speziell für Folgendes konfiguriert ist:
Bestimmen gemäß einer zweiten Richtlinie der ersten Richtlinie, die von dem ersten drahtlosen Netzwerkknoten und dem zweiten drahtlosen Netzwerkknoten verwendet wird, um die Konfiguration der drahtlosen Netzwerkfunktionen durchzuführen, wobei die zweite Richtlinie für den ersten drahtlosen Netzwerkknoten durch eine Betriebs-, Administrations- und Wartungs(*operation, administration and maintenance* - OAM)vorrichtung vorkonfiguriert ist, und wobei die zweite Richtlinie Funktionskonfigurationsinformationen beinhaltet, die den von allen drahtlosen Netzwerkknoten implementierten drahtlosen Netzwerkfunktionen entsprechen.

3. System, umfassend einen drahtlosen Netzwerkknoten eines Cloud-Funkzugangsnetzwerks (C-RAN) nach Anspruch 2 und eine Kernnetzwerkvorrichtung, Folgendes umfassend:
eine Bestimmungseinheit (501), die konfiguriert ist, um Parameter für die Konfiguration der Funktionen zu bestimmen, wobei die Parameter von einem ersten drahtlosen Netzwerkknoten verwendet werden, um die Konfiguration der drahtlosen Netzwerkfunktionen durchzuführen; und
eine Sendeeinheit (502), die konfiguriert ist, um die von der Bestimmungseinheit (501) bestimmten Parameter an den ersten drahtlosen Netzwerkknoten zu senden.

4. System nach Anspruch 3, wobei die Parameter einen der folgenden Schritte umfassen:
Informationen zu Dienstqualität *(Quality of Service* - QoS) und/oder der Verwendung eines Backhaul-Links.

5. System nach Anspruch 4, wobei, wenn die Parameter, die die Dienstqualität (QoS) umfassen, die Kernnetzwerkvorrichtung ferner Folgendes umfasst:
eine Empfangseinheit (503), die konfiguriert ist, um Dienstparameter, die von einem initiierten Dienst stammen und von einer Benutzereinrichtung (*user equipment-*UE) gesendet werden, und/oder Informationen zur Verwendung eines Backhaul-Links zu empfangen; und
wenn die Parameter bestimmt werden, die von dem ersten drahtlosen Netzwerkknoten verwendet werden, um die Konfiguration der drahtlosen Netzwerkfunktion durchzuführen, ist die Bestimmungseinheit (501) zu Folgendem konfiguriert:
Bestimmen der Dienstqualität (QoS) gemäß den Dienstparametern, die von dem initiierten Dienst stammen, von der Benutzereinrichtung (UE) gesendet und von der Empfangseinheit (503) empfangen werden;
Bestimmen der Dienstqualität (QoS) gemäß den Informationen zur Verwendung eines Backhaul-Links, die von einer Netzwerksteuervorrichtung gesendet und von der Empfangseinheit (503) empfangen werden; oder
Bestimmen der Dienstqualität (QoS) gemäß den Dienstparametern, die von dem initiierten Dienst stammen, von dem UE gesendet und von der Empfangseinheit (503) empfangen werden, und den empfangenen Informationen zur Verwendung eines Backhaul-Links, die von einer Netzwerksteuervorrichtung gesendet werden.

6. System nach Anspruch 5, wobei die Dienstparameter eine Übertragungsrate umfassen.

7. System nach den Ansprüchen 5 oder 6, wobei die Informationen zur Verwendung eines Backhaul-Links Folgendes umfassen:
Informationen zum Laden eines Backhaul-Links und/oder Informationen zur Verzögerung eines Backhaul-Links.

## Revendications

1. Procédé pour la configuration des fonctions de réseau sans fil d'un réseau d'accès radio en nuage, C-RAN, comprenant :
la détermination (201), par un premier nœud de réseau sans fil du C-RAN, d'une première politique utilisée par le premier nœud de réseau sans fil et un second nœud de réseau sans fil du C-RAN pour effectuer la configuration des fonctions de réseau sans fil, dans lequel
la première politique comprend une première partie de fonctions de réseau sans fil qui sont des fonctions de réseau sans fil et mises en œuvre par le premier nœud de réseau sans fil, et une seconde partie de fonctions de réseau sans fil qui sont des fonctions de réseau sans fil et mises en œuvre par le second nœud de réseau sans fil, dans lequel la seconde partie des fonctions de réseau sans fil comporte d'autres fonctions de réseau sans fil autres que la première partie de fonctions de réseau sans fil ; et
l'envoi (202), par le premier nœud de réseau sans fil et au second nœud de réseau sans fil, de premières informations pour la configuration des fonctions correspondant à la seconde partie de fonctions de réseau sans fil qui sont dans la première politique et mises en œuvre par le second nœud de réseau sans fil, de sorte que le second nœud de réseau sans fil termine la configuration de fonctions du second nœud de réseau sans fil selon les premières informations,
**caractérisé en ce que**
la première partie des fonctions de réseau sans fil comprend des fonctions correspondant à une couche de protocole de convergence de données par paquets, PDCP, et une couche supérieure de la couche PDCP, ou correspondant à une couche de commande de liaison radio, RLC, et à une couche supérieure de la couche RLC, dans lequel, la détermination, par un premier nœud de réseau sans fil, d'une première politique utilisée par le premier nœud de réseau sans fil et le second nœud de réseau sans fil pour effectuer la configuration du réseau sans fil comprend :
la détermination, par le premier nœud de réseau sans fil selon une seconde politique, de la première politique utilisée par le premier nœud de réseau sans fil et le second nœud de réseau sans fil pour effectuer la configuration des fonctions de réseau sans fil, dans lequel
la seconde politique est préconfigurée pour le premier nœud de réseau sans fil par un dispositif d'exploitation, d'administration et de maintenance, OAM, et dans lequel la seconde politique comportant des informations de configuration de fonction correspondant aux fonctions de réseau sans fil mises en œuvre par tous les nœuds de réseau sans fil.

2. Premier nœud de réseau sans fil d'un réseau d'accès radio en nuage, C-RAN, comprenant :
une unité de détermination (401) configurée pour déterminer une première politique utilisée par le premier nœud de réseau sans fil et un second nœud de réseau sans fil du C-RAN pour effectuer la configuration des fonctions de réseau sans fil,
la première politique comprenant une première partie de fonctions de réseau sans fil faisant partie des fonctions de réseau sans fil et mise en œuvre par le premier nœud de réseau sans fil, et une seconde partie de fonctions de réseau sans fil faisant partie des fonctions de réseau sans fil et mise en œuvre par le second nœud de réseau sans fil, la seconde partie de fonctions de réseau sans fil comportant d'autres fonctions de réseau sans fil autres que la première partie de fonctions de réseau sans fil ; et
une unité d'envoi (402), configurée pour envoyer, au second nœud de réseau sans fil, les premières informations correspondant à la seconde partie des fonctions de réseau sans fil qui sont dans la première politique, déterminées par l'unité de détermination (401), et qui sont mises en œuvre par le second nœud de réseau sans fil, de sorte que le second réseau sans fil termine la configuration des fonctions du second nœud de réseau sans fil selon les premières informations,
**caractérisé en ce que**
la première partie des fonctions de réseau sans fil comprend des fonctions correspondant à une couche de protocole de convergence de données par paquets, PDCP, et une couche supérieure de la couche PDCP, ou correspondant à une couche de commande de liaison radio, RLC, l'unité de détermination (401) étant spécifiquement configurée pour :
déterminer, selon une seconde politique, la première politique utilisée par le premier nœud de réseau sans fil et le second nœud de réseau sans fil pour effectuer la configuration des fonctions de réseau sans fil,
la seconde politique étant préconfigurée pour le premier nœud de réseau sans fil par un dispositif d'exploitation, d'administration et de maintenance, OAM, et la seconde politique comportant des informations de configuration de fonction correspondant aux fonctions de réseau sans fil mises en œuvre par tous les nœuds de réseau sans fil.

3. Système comprenant un nœud de réseau sans fil d'un réseau d'accès radio en nuage, C-RAN, selon la revendication 2 et un dispositif de réseau central, comprenant :
une unité de détermination (501) configurée pour déterminer des paramètres pour la configuration des fonctions, les paramètres étant utilisés par un premier nœud de réseau sans fil pour effectuer la configuration des fonctions de réseau sans fil ; et
une unité d'envoi (502), configurée pour envoyer les paramètres déterminés par l'unité de détermination (501) au premier nœud de réseau sans fil.

4. Système selon la revendication 3, dans lequel les paramètres comprennent : la qualité de service, QoS et/ou les informations d'utilisation de liaison terrestre.

5. Système selon la revendication 4, dans lequel, lorsque les paramètres comprennent la qualité de service, QoS, le dispositif de réseau central comprend en outre :
une unité de réception (503), configurée pour recevoir des paramètres de service qui sont d'un service lancé et envoyés par l'équipement d'utilisateur, UE, et/ou les informations d'utilisation de liaison terrestre ; et
lors de la détermination des paramètres utilisés par le premier nœud de réseau sans fil pour effectuer la configuration de fonction de réseau sans fil, l'unité de détermination (501) est configurée pour : déterminer la qualité de service, QoS, selon des paramètres de service qui proviennent du service lancé, envoyés par l'équipement d'utilisateur, UE, et reçus par l'unité de réception (503) ; déterminer la qualité de service, QoS, selon les informations d'utilisation de liaison terrestre qui sont envoyées par un contrôleur de réseau et reçues par l'unité de réception (503) ; ou déterminer la qualité de service, QoS, selon les paramètres de service qui proviennent du service lancé, envoyés par l'UE et reçus par l'unité de réception (503), et les informations d'utilisation de liaison terrestre reçues envoyées par un contrôleur de réseau.

6. Système selon la revendication 5, dans lequel les paramètres de service comprennent une vitesse de transmission.

7. Système selon la revendication 5 ou 6, dans lequel les informations d'utilisation de liaison terrestre comprennent :
des informations de chargement de liaison terrestre et/ou des informations de retard de liaison terrestre.
